# EUROPEAN PATENT SPECIFICATION

(11) **EP 4 523 417 B1**
(45) Date of publication and mention of the grant of the patent: **06.05.2026**
(21) Application number: 22737988.0
(22) Date of filing: 12.05.2022
(51) Int. Cl.: H04N 21/218, H04N 21/234, H04N 21/235, H04N 21/238, H04N 21/435, H04N 21/81, H04N 21/854

(54) **METHODS, SERVERS AND DEVICES FOR TRANSMITTING AND RENDERING MULTIPLE VIEWS COMPRISING NON-DIFFUSE OBJECTS**
METHODEN, SERVER UND VORRICHTUNGEN ZUR ÜBERTRAGUNG UND DARSTELLUNG VON MEHRFACHANSICHTEN MIT NICHT-DIFFUSEN OBJEKTEN
MÉTHODES, SERVEURS ET DISPOSITIFS POUR TRANSMETTRE ET RENDRE DES VUES MULTIPLES COMPRENANT DES OBJETS NON-DIFFUSÉS

(43) Date of publication of application: 19.03.2025
(73) Proprietor: Tencent Europe (France) SAS, 92977 Paris la Défense Cedex (FR)
(72) Inventor: JUNG, Joël, 78320 Le Mesnil-Saint-Denis (FR)
(74) Representative: Gunzelmann, Rainer
(86) International application number: PCT/IB2022/000293
(87) International publication number: WO 2023/218219

(56) References cited:
- US-A1- 2021 006 834
- ANONYMOUS: "Text of ISO/IEC DIS 23090-12 MPEG Immersive Video", no. n20001, 30 January 2021 (2021-01-30), pages 1 - 80, XP030293025, Retrieved from the Internet <URL:https://dms.mpeg.expert/doc_end_user/documents/133_OnLine/wg11/MDS20001_WG04_N00049.zip WG04N00049_ISO_IEC_23090-12_DIS/WG04N00049_ISO_IEC_23090-12_DIS.docx> [retrieved on 20210130]
- VINOD MV (OFINNO): "Draft use cases and requirements for MIV - edition-2", no. m59085, 16 January 2022 (2022-01-16), XP030299927, Retrieved from the Internet <URL:https://dms.mpeg.expert/doc_end_user/documents/137_OnLine/wg11/m59085-v1-m59085_v0.zip m59085_v0.docx> [retrieved on 20220116]
- FACHADA SARAH ET AL: "Depth Image-Based Rendering of Non-Lambertian Content in MPEG Immersive Video", 2021 INTERNATIONAL CONFERENCE ON 3D IMMERSION (IC3D), IEEE, 8 December 2021 (2021-12-08), pages 1 - 6, XP034047845, DOI: 10.1109/IC3D53758.2021.9687263
- BOYCE JILL M ET AL: "MPEG Immersive Video Coding Standard", PROCEEDINGS OF THE IEEE, IEEE. NEW YORK, US, vol. 109, no. 9, 10 March 2021 (2021-03-10), pages 1521 - 1536, XP011873492, ISSN: 0018-9219, [retrieved on 20210818], DOI: 10.1109/JPROC.2021.3062590

## Description

### Field of the invention

The invention relates to the field of computer graphics. It relates more particularly to a method for encoding and transmitting data for rendering non-diffuse pixels of multiples views of a same scene. The invention may be used in the context of immersive videos.

Diffuse surfaces have an apparent brightness that is the same regardless the observer's point of view. They produce a diffuse reflectance of the light: the light is absorbed and re-emitted in all directions. Concrete, wood and wool are examples of such surfaces.

In contrast, non-diffuse surfaces have the property that the visible texture depends on the point of view. Almost all natural and high-quality synthetic scenes exhibit non-diffuse reflections. Typical examples of non-diffuse surfaces are mirrors, windows, and glossy surfaces.

The reflectance of a surface in a particular direction is the fraction of incident light which is reflected by this surface in this particular direction. Hereafter, the reflectance of a surface corresponding to a point of view refers to the reflectance of the surface of this object in the direction of this point of view. For a non-diffuse surface, the reflectance varies with the point of view.

Pixels representing a non-diffuse surface are called non-diffuse pixels.

### Background of the invention

In an immersive video, a user can navigate in a scene through different views. Because of memory and/or computational limitation of the client device, these multiple views are received in a compressed form from a server.

The transmission rate between the server and the client device is limited, such that efficient compression schemes are needed to reduce the amount of data to transmit.

Current methods of compression and transmission of multiple views are not satisfying for rendering non-diffuse pixels of these views.

In particular, MPEG Immersive Video (MIV), a recent codec (ISO/IEC MPEG Immersive Video (MIV) standard, MPEG-1 Part 12) designed for immersive video, fails to handle view-dependent effects such as non-diffuse reflections.

The MIV method consists in fully transmitting so-called "basic" views and pruning alternate views such that the client receiver can render them, while reducing the amount of data to be transmitted.

Because of the pruning process, the reflectance of the non-diffuse pixels in the alternate views rendered by the client is not correct.

An extension of the standard MIV method enables to transmit additional data for rendering texture of non-diffuse pixels of the alternate views. Nevertheless, this method requires a large quantity of transmitted data in order to render the views with a suitable quality.

There exists a need for a solution that enables to transmit data for rendering non-diffuse pixels in multiple views.

### Summary of the disclosure

A purpose of the present invention is to overcome all or some of the limitations of the prior art solutions, particularly those outlined above.

The invention is defined by the appended claims.

In contrast to the prior art, a first aspect according to claim 1 takes into account the transmission rate and the pixel rate when transmitting data for rendering non-diffuse pixels.

In particular, this first aspect of the disclosure proposes to generate data to be transmitted for a client to render non-diffuse pixels, such that the size of these data is a function of pixel and/or transmission rate.

The transmission rate corresponds to the quantity of data which can be transmitted from the server to the client per unit of time. The pixel rate corresponds to the quantity of received data which can be decoded and rendered on the client side per unit of time.

In one embodiment, the pixel rate and the transmission rate are negotiated during an initialisation phase of a communication session between the server and the client device. In another embodiment the negotiation occurs just before the step of selecting the non-diffuse pixels.

Advantageously, generating a quantity of transmitted data accordingly to transmission rate and pixel rate avoids these data to be transmitted very slowly or even be arbitrarily truncated during their transmission or during their decoding and rendering on the client side, resulting in a degradation of the user experience.

The first aspect of the disclosure thus enables, for a same amount of transmitted data (this amount including the stream of encoded views and the data representative of the non-diffuse pixels), to improve the quality of rendered views on the client side. Corollary, it enables to transmit a limited amount of data while achieving a given quality of the rendered views.

The data representative of non-diffuse pixels are hereafter called "non-diffuse data".

Transmitting all non-diffuse pixels, with constraint transmission rate, could lead the other pixels or the views encoded in the stream to be more compressed, or could lead to a slow transmission thereof. Both consequences would have a negative impact on all rendered surfaces, and not only the non-diffuse ones.

The first aspect of the disclosure improves the rendering of non-diffuse surfaces without significantly penalizing the transmission of the basic and alternate views. In other words, this first aspect of the disclosure proposes a way to adapt the non-diffuse data to pixel rate and/or transmission rate limitations, such that the overall quality of the rendered views is not significantly impacted.

In the following embodiments, the transmission of non-diffuse data may take the form of a supplemental enhancement information message. The client that uses this message may accelerate its processing of non-diffuse pixels; the client that does not use it applies a conventional process.

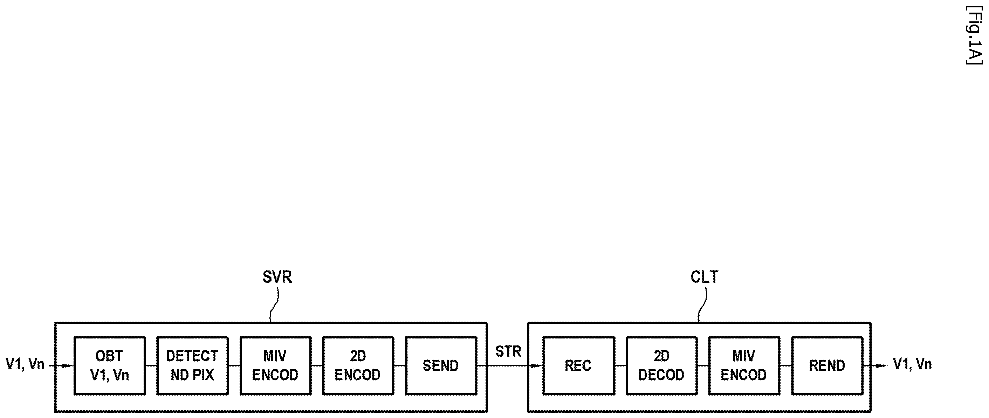

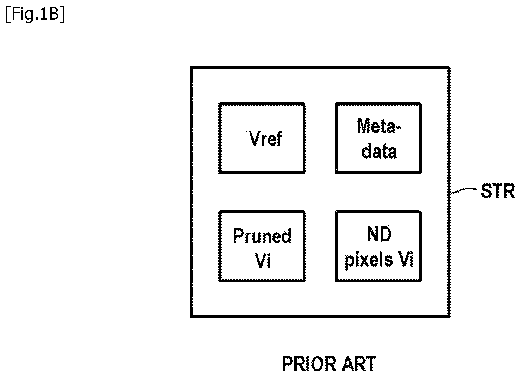

An example of such a conventional process by the client in the prior art is represented in figure 1A which shows a server transmitting, to a client device, a stream for rendering multiple views of a scene according to an extension of the MIV method. As shown in figure 1B, the stream comprises the basic view, the pruned alternate views, metadata to reconstruct the alternate views, as well as information on the non-diffuse pixels in the alternate views.

Hereafter, the pruned alternate views comprised in the stream are called "additional" views.

Adjusting the size of non-diffuse data accordingly to the pixel and/or transmission rates may be done by choosing an appropriate encoding scheme. For instance, if non-diffuse pixels are encoded on 16 bits and non-diffuse data are too large regarding a transmission rate limitation, the non-diffuse pixels are converted to 8 bits such that the quantity of transmitted data does not saturate their transmission or their decoding.

Regardless of whether the encoding scheme is modified or not, entropy coding (e.g. Huffman coding, arithmetic coding...) can also be applied to the non-diffused pixels to reduce the amount of data to be transmitted according to pixel rate and/or transmission rate limitations.

Controlling the size of transmitted data can also be done during the step of selecting the non-diffuse pixels, as allowed by the following embodiment.

According to another embodiment of the method, said non-diffuse pixels are selected based on differences between:
- textures of pixels of the at least one alternate view, and
- textures of pixels of the at least one basic view matching said pixels of the alternate view.

Pixels of two different views are considered as "matching" if they represent same or close positions in the scene. In other words, a pixel from the alternate view and a pixel from the basic view match if they represent the same area in the three-dimensional space where the scene takes place.

In this embodiment, the selection of non-diffuse pixels in the alternate views is based on a comparison between the pixels of the basic view and the pixels of the alternate views. Such a comparison advantageously allows selecting non-diffuse pixels, and thus controlling the size of transmitted data, according to pixel rate or transmission rate limitations.

According to a particular embodiment, said selected non-diffuse pixels are among those maximizing said difference.

In particular, difference of texture between pixels of the basic view and an alternate view characterises a degree of non-diffusivity of pixels. For instance, matching pixels are:
- non-diffuse if they have very different textures; or
- diffuse if they share similar textures.

For a non-diffuse pixel, the higher the texture difference, the higher the quality of its rendering is improved by taking into account the non-diffusiveness of this pixel.

Accordingly, selecting non-diffuse pixels with the highest differences of texture enables to significantly reduce quantity of non-diffuse data to be transmitted while maximizing the quality of rendered non-diffuse surfaces.

In this embodiment, the differences between pixels can be computed during the step of detecting non-diffuse pixels in the alternate views. The position of each pixel in the scene is computed, for instance by projecting each view in the same three-dimensional space. Pixels, respective of the basic and alternate views, and which have close positions in this three-dimensional space, are compared with respect to their textures. The difference value thus obtained for each pixel of the alternate view can be saved for performing the selecting step as described above.

According to a particular embodiment of the method above, said non-diffuse pixels are selected based on a comparison between said differences and at least one threshold depending on said pixel rate and/or said transmission rate.

This embodiment enables to control the number of selected non-diffuse pixels by modifying the threshold according to the pixel rate or transmission rate limitations.

According to a particular embodiment of the method above, said non-diffuse pixels are selected based on probabilities of detected non-diffuse pixels to be non-diffuse pixels; said probabilities being computed based on said differences.

Such an embodiment advantageously allows selecting non-diffuse pixels such that:
- the size of transmitted data per unit of time does neither exceeds the transmission rate nor the pixel rate; and
- the non-diffuse pixels which have the largest impact on quality of rendered views are transmitted.

According to a particular embodiment, said selecting step comprises substeps of
- associating the pixels of said views with epipolar plane image lines;
- determining, for each epipolar plane image line, at least one value representative of the form of this epipolar plane image line; and
said non-diffuse pixels are selected based on said values.

A slice of stacked views of a same scene presents lines called epipolar plane image (EPI) lines. Each line corresponds to a same object displayed in consecutive views. If the consecutive views are spaced with the same angle, the geometry of these lines reflects the diffusivity of the corresponding objects. Namely, a diffuse object yields a straight EPI line whereas a non-diffuse object yields a curved EPI line.

Hence, determining the form of an EPI line, for instance by computing its curvature, enables to determine a degree of non-diffusivity of all pixels of this EPI line. This is particularly advantageous when the basic view and the alternate views correspond to consecutive views spaced at the same angle, since it permits the accurate selection or rejection of all pixels of an EPI lines with respect to the form of their corresponding EPI line.

According to another aspect, the invention proposes a method implemented by a server for transmitting data used by a device for rendering multiple views of a single scene, said multiple views comprising at least one basic view and at least one alternate view, said method comprising steps of:
- generating a stream by encoding said views;
- identifying at least one non-diffuse object in said views;
- generating data representative of said at least one non-diffuse object, said data comprising information enabling said device to render, for each said alternate view, said at least one non-diffuse object with a reflectance corresponding to this view; and
- transmitting said stream and said data to said device.

Correlatively, the invention proposes a server for transmitting data used by a device for rendering multiple views of a single scene, said multiple views comprising at least one basic view and at least one alternate view, said server comprising:
- a module of generating a stream by encoding said views;
- a module of identifying at least one non-diffuse object in said views;
- a module of generating data representative of said at least one non-diffuse object, said data comprising information enabling said device to render, for each said alternate view, said at least one non-diffuse object with a reflectance corresponding to this view; and
- a module of transmitting said stream and said data to said device.

The invention also proposes a method implemented by a device for rendering multiple views of a single scene, said multiple views comprising at least one basic view and at least one alternate view, a said view comprising a texture image, said method comprising steps of:
- receiving, from a server, a stream of encoded said views and data representative of at least one non-diffuse object in said views, said data comprising information enabling said device to render, for each view, said at least one non-diffuse object with the reflectance corresponding to this view;
- rendering said views based on said stream and said data, said at least one non-diffuse object being rendering with their corresponding reflectance.

Correlatively, the invention proposes a device for rendering multiple views of a single scene, said multiple views comprising at least one basic view and at least one alternate view, a said view comprising a texture image, said device comprising:
- a module of receiving, from a server, a stream of encoded said views and data representative of at least one non-diffuse object in said views, said data comprising information enabling said device to render, for each view, said at least one non-diffuse object with the reflectance corresponding to this view;
- a module of rendering said views based on said stream and said data, said at least one non-diffuse object being rendering with their corresponding reflectance.

This aspect of the disclosure invention proposes to transmit non-diffuse data which represents non-diffuse objects in the views. It enables to render non-diffuse surfaces while reducing the quantity of transmitted data. Indeed not all detected non-diffuse pixels have to be individually represented in the transmitted data.

The identification of non-diffuse objects may be based on detection of non-diffuse pixels as described previously. Non-diffuse objects may also be objects labelled as such. This identification may include an additional step of selection among the detected non-diffuse pixels according to embodiments described above. In this case, a non-diffuse object can be detected by grouping adjacent detected non-diffuse pixels.

The detection of non-diffuse pixels can also be based on a machine learning method. For instance using a convolutional neural network which takes each view as input, and outputs the position of each non-diffuse object in each view.

According to a particular embodiment of the method described above, said data comprise, for each said alternate view and for at least one said non-diffuse object, a texture difference between this object displayed in this alternate view and the same object displayed in a said basic view.

Instead of transmitting the texture of non-diffuse objects, this embodiment proposes that the transmitted data comprise differences of texture between the basic view and the alternate views. Transmitting differences of texture further reduces the size of transmitted data.

Since the textures of both diffuse and non-diffuse objects of the basic view are transmitted, the difference between textures of an alternate view and the basic view is sufficient for the client to recover the texture of non-diffuse pixels of the alternate view. Advantageously, recovering texture of non-diffuse objects in the alternate views from textures of the basic view and differences of textures may be performed with less computer resources.

This embodiment hence allows reducing the amount of data transmitted and accurately rendering non-diffuse objects in the alternate views with less computer resources.

According to another embodiment, said data comprise, for said at least one non-diffuse object, a set of parameters of a reflectance model of this object.

Reflectance models such as Phong model are used to render the reflectance of an object based on parameters such as light source angles, surface material of the object and surface reflectance.

Advantageously, the parameters of the reflectance model represent a small amount of data to be transmitted. Furthermore, their size is independent of the size of the object. This embodiment hence enables to greatly reduce the amount of non-diffuse data to be transmitted to the client.

According to a particular embodiment, the method comprises a step of generating a generated view corresponding to a position of a given point of view shared between said device and said server, said generating step being based on said at least one alternate view and said at least one basic view, said generated view comprising a texture image of said at least one non-diffuse objects, wherein said data comprise information enabling said device to render said at least one non-diffuse object with a reflectance corresponding to the generated view.

In this embodiment, the generated view may not be coded within the stream.

This embodiment enables the client to render non-diffuse objects with reflectance corresponding to the generated views. This embodiment reduces the computer resources needed for rendering generated intermediate views on the client side.

The client may generate from (i) the decoded stream which contains information on the basic view and alternate views and (ii) from the shared position of the given point of view, an intermediate view for this point of view. Yet, the sole information of the stream do not enable the client to render the non-diffuse objects in the intermediate view adequately. To render non-diffuse objects adequately in the intermediate view without significantly increasing the client resources, the client uses the textures of non-diffuse objects generated by the server.

Furthermore, only the information on the non-diffuse objects have to be transmitted, which limits the amount of data to be transmitted.

For the views generated by the server and the view generated by the client to be identical, a message comprising the position may be transmitted from the client to the server.

Thus, in one particular embodiment, the method comprises a step of receiving said position from said device.

According to a particular embodiment, said data comprise, for at least one said non-diffuse object:
(i) a difference between:
   - a texture of this object in said generated view and
   - a texture of this object in said at least one basic view; and
(ii) a difference between:
   - a texture of this object in said generated view and
   - a texture of this object in said at least one alternate view from which the generated view is generated.

This embodiment limits the amount of transmitted data which enable to render the non-diffuse objects in both of the generated views and the alternate views.

According to a particular embodiment, the step of generating the generated view is performed by computing the texture image of a said generated view as a weighted average of:
- textures of a said basic view; and
- textures of a said alternate view.

This embodiment provides a simple method in terms of computer resources needed for generating intermediate views. For instance, in order to generate a view with the same angle offsets with the basic as with an alternate view, the average of these basic and alternate views is computed, with equal weights for both views. The weights of the basic and alternate views can also be modified in order to change the angle offset with one view or the other.

According to a particular embodiment, said at least one basic view and said at least one alternate view comprise a depth map, and said generating step of a generated view comprises substeps of:
- generating a three-dimensional point cloud from textures and depth map of at least one of said basic and alternate views;
- generating the texture image of said generated view based on a projection of said point cloud in a two-dimensional space.

In this embodiment, the pixels of basic and alternate views are mapped into the same three-dimensional space. The resulting point cloud is then projected in two-dimensional space to form the generated texture image. Generally, this projection is incomplete and the generated texture image has missing pixels. The projected point cloud can be processed in order to determine the texture of missing pixels.

The more views are used to generate the three-dimensional point cloud, the less texture will be missing in the projected point cloud, and the more accurate will be the generated texture image.

The invention also provides a computer program comprising instructions for performing the steps of the method according to any of the above-described embodiments, when said program is executed by a computer or a processor.

It should be noted that the computer programs referred to in this application may use any programming language, and be in the form of source code, object code, or code intermediate between source code and object code, such as in a partially compiled form, or in any other desirable form.

The invention also provides a storage medium, readable by computer equipment, of a computer program comprising instructions for executing the steps of the method according to one of the embodiments described above, when said program is executed by a computer or a processor.

The storage medium referred to in this statement may be any entity or device capable of storing the program and being played by any computer equipment, including a computer. For example, the medium may include a storage medium, or a magnetic storage medium, such as a hard drive.

Alternatively, the storage medium may correspond to a computer integrated circuit in which the program is incorporated, and adapted to execute a method as described above or to be used in the execution of such method.

### Brief description of the drawings

[Fig. 1A] Figure 1A shows a server and a device according to prior art;
[Fig. 1B] figure 1B shows a stream of encoded views according to prior art;
[Fig. 2] figure 2 shows a server and a device according to a first embodiment of the invention;
[Fig. 3] figure 3 represents in flowchart the main steps of a method implemented by the server and the main steps of a method implement by the device in the first embodiment of the invention;
[Fig. 4] figure 4 shows a server and a device according to a second embodiment of the invention;
[Fig. 5] figure 5 represents in flowchart the main steps of a method implemented by the server and the main steps of a method implement by the device in the second embodiment of the invention;
[Fig. 6] figure 6 shows a server and a device according to a third embodiment of the invention;
[Fig. 7] figure 7 represents in flowchart the main steps of a method implemented by the server and the main steps of a method implement by the device in the third embodiment of the invention;
[Fig. 8A] figure 8A shows transmitted data according to a particular embodiment;
[Fig. 8B] figure 8B shows transmitted data according to a particular embodiment;
[Fig. 8C] figure 8C shows transmitted data according to a particular embodiment;
[Fig. 8D] figure 8D shows transmitted data according to a particular embodiment;
[Fig.9A] figure 9A represents the textures of objects displayed in two views;
[Fig.9B] figure 9B represents texture differences of objects displayed in two views, according to a particular embodiment;
[Fig.9C] figure 9C represents texture differences of objects displayed in two views, according to a particular embodiment.
[Fig 10] figure 10 illustrates the hardware architecture of a server according to a particular embodiment of the invention;
[Fig 11] figure 11 illustrates the hardware architecture of a device according to a particular embodiment of the invention.

### Description of embodiments

Several embodiments of the invention will now be described. Generally speaking and as previously mentioned, the invention provides a method implemented by a server for generating and transmitting data used by a client device to render non-diffuse pixels of multiples views of a same scene.

### First embodiment

The first embodiment is in the context where the size of the transmitted data depends on the transmission rate from the server to the device and/or on the pixel rate for decoding and rendering by the client device.

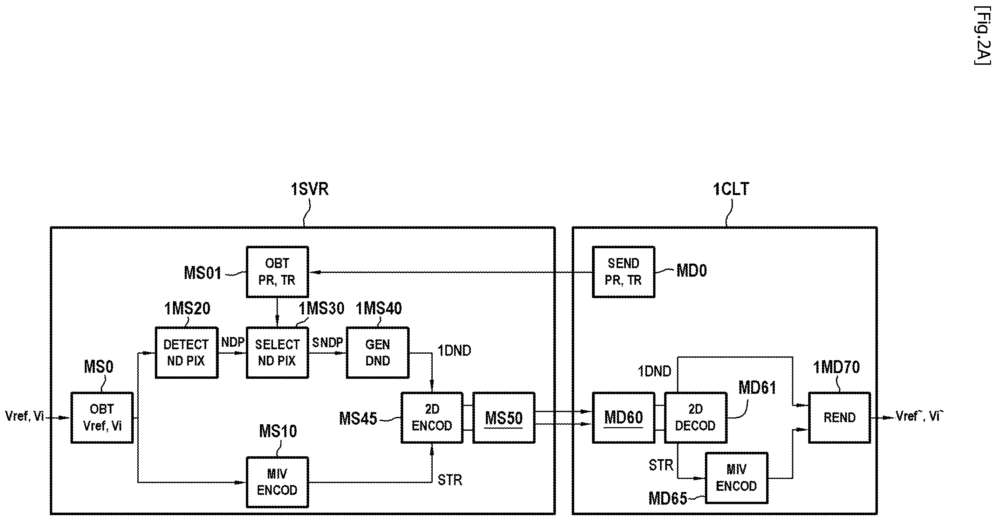

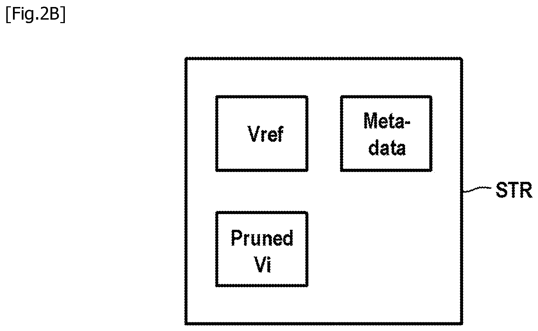

Figure 2A shows a server 1SVR and a device 1CTL according to this first embodiment. The device is a client which receives a stream STR of encoded views and additional data 1DND for rendering these views. Figure 2B represents a stream STR according to the first embodiment.

The server 1SVR comprises a module MS0 of obtaining multiple views of a same scene S, namely basic views Vref and alternate views Vi. This module MS0 can for instance be an acquisition module connected to cameras configured to capture the multiple views. In a variant; the module MS0 is a module of synthetizing the multiple views.

Each view Vref or Vi comprises a texture image Tref or Ti. In this embodiment, each texture image is associated with a depth map Dref or Di. Hence each pixel has an attribute of texture, which corresponds to a color, and an attribute of depth, which corresponds to a distance of the pixel with a point of view of the scene S.

The server 1SRV comprises an encoder module MS10 of generating a stream STR which contains information for partially rendering the multiple views Vref and Vi. The data 1DND comprise information on selected non-diffuse pixels of alternate views Vi, and thus enable to refine the rendering of the views partially rendered from the stream STR.

As mentioned before, the man skilled in the art understands that, in the rendered multiple views:
- the texture of the selected non-diffuse pixels of alternate views would display the appropriate reflectance (i.e. the reflectance corresponding to the position of the viewer with respect to the object and the direction of the light in the scene S) ; and
- the texture of the non-selected non-diffuse pixels of alternate views would not display the appropriate reflectance.

In this embodiment, this encoding is done according to the standard MIV method. Accordingly, the module MS10 performs a pruning of the alternate views Vi. The stream STR generated by the module MS10 contains pixels from the basic view Vref and the pruned alternate views (also called the additional views) as well as metadata necessary for recovering the alternate views Vi from the basic view Vref and the additional views, but this recovering from the stream alone does not include the rendering of the adequate reflectance of the non-diffuse pixels.

The data 1DND are generated by 1MS20, 1MS30 and 1MS40 modules.

First, the module 1MS20 detects the non-diffuse pixels NDP in the alternate views Vi. This detection can be done by comparing, for each alternate view Vi, each pixel of this view with pixels of the basic view, based on their positions and their textures.

For instance, the pixels of the different views are mapped into a common three dimensional space. This mapping can be based on depth maps associated to each view. In each alternate view, the textures of pixels are compared with the textures of the pixels of the basic view which have close positions in the three-dimensional space. Then, if a difference of textures associated to a pair of pixels exceed a predefined threshold, these pixels are detected as non-diffuse.

Second, the module 1MS30 uses the differences of textures for each detected non-diffuse pixel to select non-diffuse pixels SNDP. This selection enables to reduce the quantity of information to transmit in case they exceed transmission rate or pixel rate limitations.

In some case, the pixel or transmission rate can change depending on the client device 1CLT. In this case, it is necessary for the client to inform the server of these changes.

To this end, in the embodiment represented in figure 2, a module MD0 of the client device 1CLT sends the pixel rate PR and transmission rate TR to the server SVR, which receives them via a module MS01.

The module 1MS30 obtains the pixel rate PR and transmission rate TR from the module MS01.

Thirdly, the module 1MS40 generates data 1DND representative of the non-diffuse pixels SNDP selected by the module 1MS30. These data 1DND will be decoded and used by the client device 1CLT to render the texture of non-diffuse pixels of the alternate views.

For instance, the 1DND data comprise the textures of the selected non-diffuse pixels of the alternate views Vi.

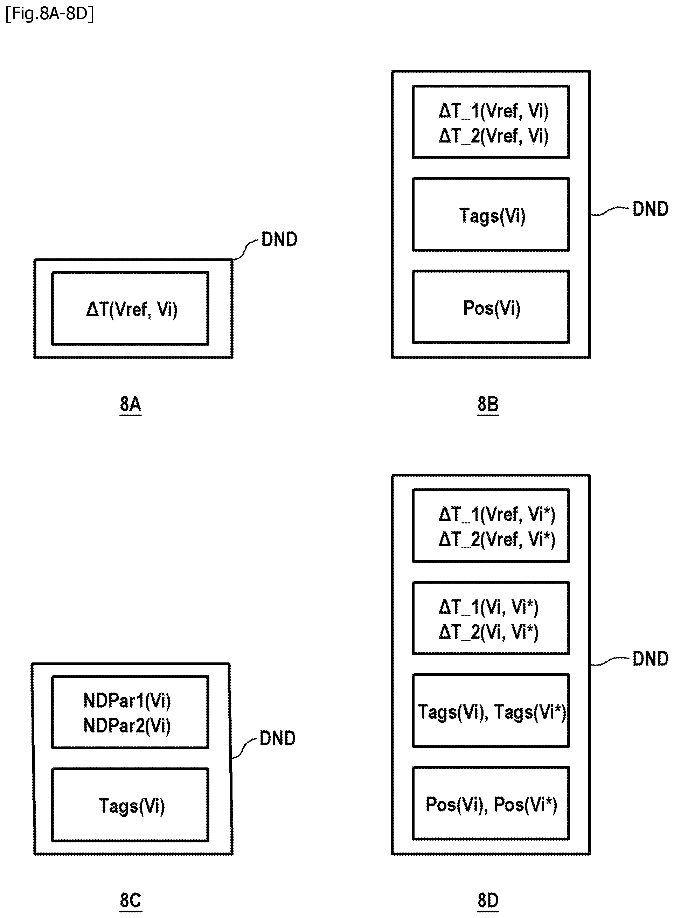

As represented in figure 8A, the 1DND data may also comprise the differences of texture ΔT(Vref, Vi) between the non-diffuse pixels of the alternate views Vi and the pixels of the basic view which correspond to the same positions in the scene S.

In this embodiment, the size of data 1DND is controlled during the selection of non-diffuse pixels by the module 1MS30. In particular, the module 1MS30 selects a number of non-diffuse pixels and/or modifies the coding scheme of at least some of the non-diffuse pixels as a function of the pixel rate and/or on the transmission rate.

For instance, among the detected non-diffuse pixels NDP, in the case where differences of texture have been calculated during the detection of non-diffuse pixels by the module 1MS20, the pixels which have the highest differences are selected. The number of pixels SNDP so selected increases with the pixel rate and/or the transmission rate.

Without exceeding the scope of the invention, the methods used for detecting or selecting the non-diffuse pixels SNDP can be different from the ones described above.

For instance, in one embodiment, epipolar plane image (EPI) lines are constructed from the views Vref and Vi. Each EPI line is formed with pixels of multiple views. The form of each EPI line - namely its curvature- depends on the reflectance of the surface this EPI line is associated to.

In particular, an EPI line and all the pixels forming it can be detected as non-diffuse if the curvature of the EPI line is non zero.

Thereafter, the detected non-diffuse pixels which are associated with the most curved EPI lines are selected; the quantity of so selected non-diffuse pixels SNDP being a function of the pixel rate and/or the transmission rate.

A module MS45 encodes the stream STR and the non-diffuse data DND into messages to be transmitted. For instance, the basic and additional views in the stream are encoded with a standard format (such as MPEG-2, H.264, HEVC, VVC, VP8, VP9, AV1...) and the non-diffuse data DND are encoded into a separate message, for instance a supplemental enhancement information message.

A module MS50 transmits these encoded stream STR and data 1DND to the client device 1CLT.

These encoded stream STR and data 1DND are received on the client side by a module MD60, and then decoded by a module MD61.

In this embodiment, the data 1DND representative of non-diffuse pixels and the stream STR are processed independently by the client 1CLT.

In this embodiment, a module MD65 reconstructs the alternate views Vi according to the MIV method. In particular, the alternate views Vi are reconstructed based on the basic view Vref, the additional views and the metadata comprised in the stream STR. This reconstruction of the alternate views Vi is partial since it does not include the rendering of the adequate texture of the non-diffuse surfaces. In particular, this partial rendering does not enable to display the adequate reflectance of the non-diffuse surfaces.

To complete the rendering, a module MD70 combines the partially rendered alternate views with the data 1DND to render the selected non-diffuse pixels SNDP with reflectance corresponding to their respective alternate view, and outputs the reconstructed basic view Vref^{~} and the reconstructed alternate views Vi^{~},

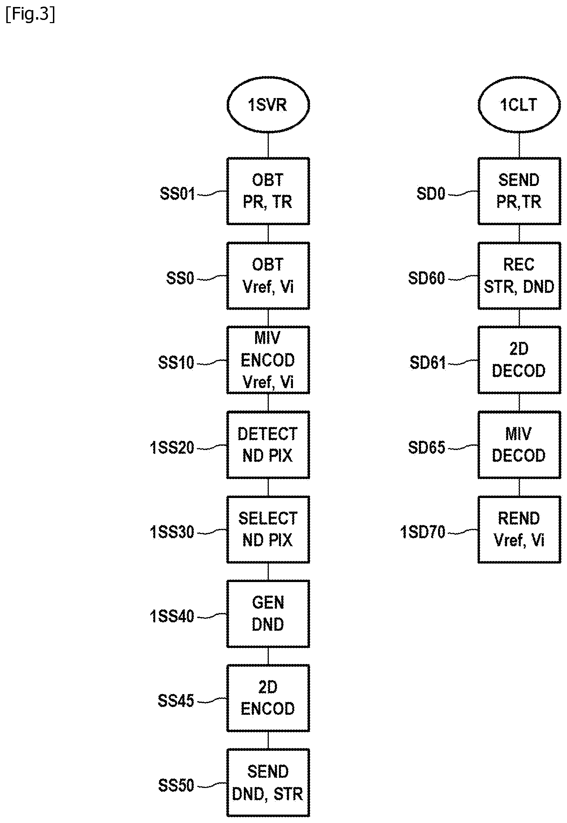

Figure 3 represents in flowchart the main steps of the methods respectively implemented by the server and the device in this first embodiment.

On the client 1CLT side, the first embodiment of the method for rendering multiple views is composed by the following step:
- a step SD0, performed by the module MD0, of sending the pixel rate PR and transmission rate TR to the server 1SVR;
- a step SD60, performed by the module MD60, for receiving the stream STR and the non-diffuse data 1DND transmitted by the server 1SVR;
- a step SD61, performed by the module MD61 of decoding the transmitted stream STR and non-diffuse data 1DND;
- a step SD65,performed by the module MD65 of decoding the stream STR;
- a step 1SD70, performed by the module 1MD70 of rendering the views Vref and Vi.

On the server 1SVR side, the first embodiment of the method for transmitting data used by the device 1CTL for rendering the views is composed by the following step:
- a step SS01, performed by the module MS01, for receiving from the device 1CLT the pixel and transmission rates PR and TR;
- a step SS0, performed by the module MS0, for obtaining the basic view Vref and the alternate views Vi;
- a step SS10, performed by the module MS10 for encoding the stream STR;
- a step 1SS20, performed by the module 1MS20 for detecting non-diffuse pixels;
- a step 1SS30, performed by the module 1MS30 for selecting the non-diffuse pixels SNDP;
- a step 1SS40, performed by the module 1MS40 for generating the non-diffuse data 1DND;
- a step SS45, performed by the module MS45 for encoding the stream STR and the non-diffuse data;
- a step SS50, performed by the module MS50 for sending the encoded stream STR and non-diffuse data 1DND.

### Second embodiment

In this second embodiment, the stream STR of encoded views is shown in figure 2B, identical or similar to those of the first embodiment.

This second embodiment is in the context where non-diffuse objects are detected and where transmitted data comprise information enabling the client to render these non-diffuse objects with the reflectance corresponding to each view in which these objects appear.

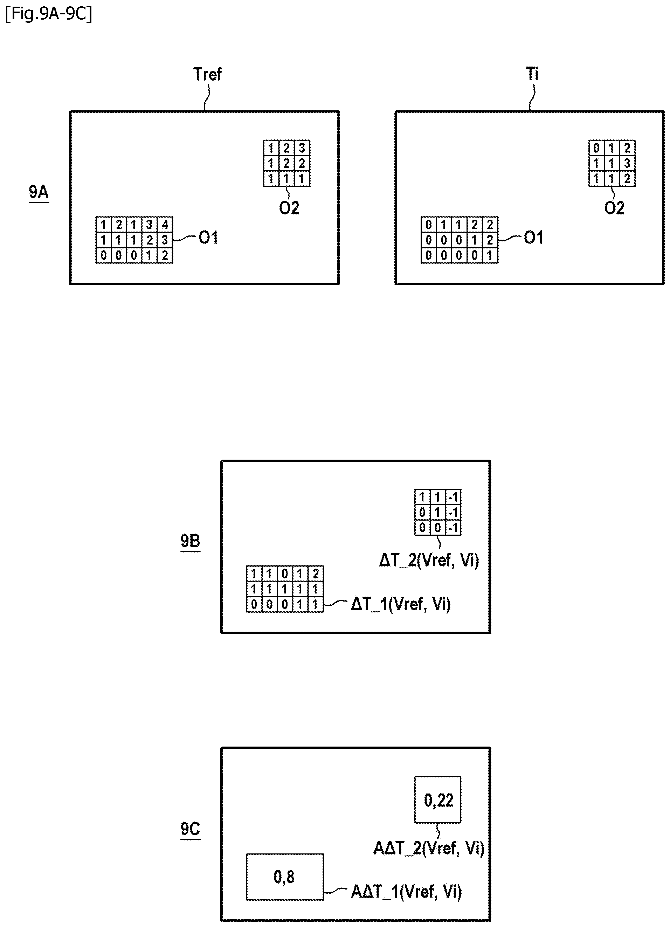

In an example shown by figure 9, two non-diffuse objects O1 and O2 are identified.

Figure 9A shows the texture image Tref of a basic view Vref and the texture image Ti of an alternate view Vi. Two objects O1 and O2 are identified in these texture images. Only the pixels representing these objects are represented.

In figure 9A, each texture of a pixel is represented by a number. Notice that this example has only illustrative purpose. A pixel on a texture image can be represented by several numbers. For instance, with RGB representation, a pixel is represented by three values, each one indicating respectively the levels of red, green and blue of the texture image at the position of this pixel.

Due to different points of view, the objects O1 and O2 do not have the same aspect in the different views Vref and Vi, hence the pixels representing the objects O1 and O2 have different textures depending on the view Vref or Vi in which they appear.

Figure 9B shows the pixelwise differences ΔT_1(Vref, Vi) between the texture of object O1 in the alternate view Vi and the texture of the same object in the basic view Vref. Figure 9B also shows the pixelwise differences of texture ΔT_2(Vref, Vi) for object O2.

In the case where a texture of a pixel corresponds to several numbers, a difference of texture between two pixels can be the difference between the sums of the number representing the textures. For instance, in a RGB representation, the difference between a texture (20,100,0) and a texture (10, 105,2) is defined as 20 + 100 + 0 - 10 - 105 - 2 = 3. In RBG representation, such a difference corresponds to a difference of luminance between the two pixels.

Figure 9C shows the average difference AΔT_1(Vref, Vi) between the texture of object O1 in the alternate view Vi and the texture of the same object in the basic view Vref. The average AΔT_1(Vref, Vi) shown in figure 9C corresponds to the average of differences ΔT_1(Vref, Vi) shown in figure 9B. Figure 9C also shows the average difference of texture AΔT_2(Vref, Vi) for object O2.

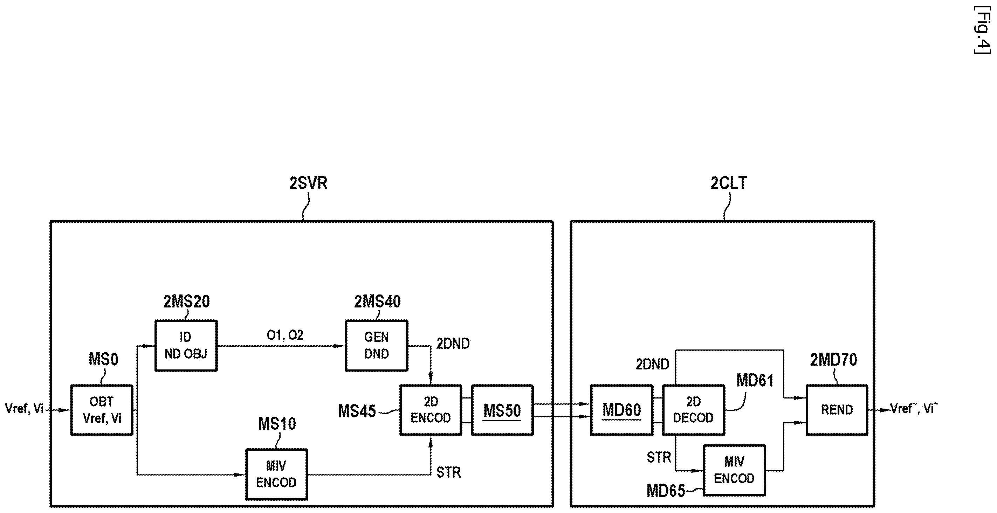

Figure 4 shows a server 2SRV and a device 2CLT according to the second embodiment of the invention.

In this embodiment, modules MS0, MS10, MS45, MS50, MD60, MD61, MD65 of the server 2SVR are identical to the modules of the server 1SRV with the same reference.

In this embodiment, the data 2DND representative of non-diffuse surfaces are generated by two modules 2MS20 and 2MS40.

The module 2MS20 identifies the non-diffuse objects in each view. The corresponding identification step 2SS20 may consist in detecting non-diffuse pixels on each view, as described previously for the first embodiment, and applying mathematical morphology operations such as opening and closing in order to identify groups of non-diffuse pixels with distinct objects.

The identification of non-diffuse objects on each view can also be performed with machine learning techniques. For instance, the non-diffuse objects can be identified in each view with a convolutional neural network trained for detecting object from texture images and classifying their type of surface (such as diffuse or non-diffuse).

Each object in the scene S can be associated to a label. In each view, the non-diffuse pixels associated with an object are associated with the label of this object. These labels enable to compare a group of pixels of an alternate view Vi with the group of pixels in the basic view Vref which correspond to the same object.

The module 2MS40 generates the data 2DND representative of the non-diffuse objects identified by the module 2MS20.

In one embodiment, the non-diffuse data 2DND generated by the module 2MS40 comprise pixelwise differences of texture such as illustrated by figure 9B.

In another embodiment, the non-diffuse data 2DND generated by the module 2MS40 comprise average differences of texture such as illustrated by figure 9C.

The non-diffuse data 2DND may also comprise labels Tags(Vi) of each non-diffuse object in the alternate views Vi, as represented in figure 8B.

The non-diffuse data 2DND may also comprise positions Pos(Vi) of each non-diffuse object in the alternate views Vi, as represented in figure 8B. In particular, the positions Pos(Vi) can be the relative position of each object in the texture image Ti of each alternate view Vi with respect to its position in the texture image Tref of the basic view Vref.

On the client device 2CLT represented in figure 4, the module 2MD70 uses the non-diffuse data 2DND to combine the differences of texture ΔT_1(Vref, Vi) and ΔT_2(Vref, Vi) to the texture images of the pruned alternate views. In this embodiment these texture differences are combined with the pruned views repectively corresponding to alternate views Vi at the adequate positions on the images Ti thanks to the labels Tags(Vi) and the positions Pos(Vi).

Instead of comprising differences of texture, in another embodiment, the non-diffuse data 2DND comprise parameters NDPar1, NDPar2 of a reflectance model for each non-diffuse object according to each point of view. The parameters of the reflectance model of each non-diffuse object are used on client side by the module 2MD70 to compute the appropriate texture of this object.

An example of such model of reflectance is the Phong model. The Phong model provides an equation for computing the illumination of each surface point of an object.

Information on light source angles, and surface materials, surface reflectance are needed for rendering the non-diffuse objects. They can be known either because the scene S is synthetic, and was generated by a rendering software (like Blender, or Unity), or because the natural scene has been manually labelled.

For a given alternate view Vi, the parameters of the reflectance model may comprise the relative angle or position between the observer and each object.

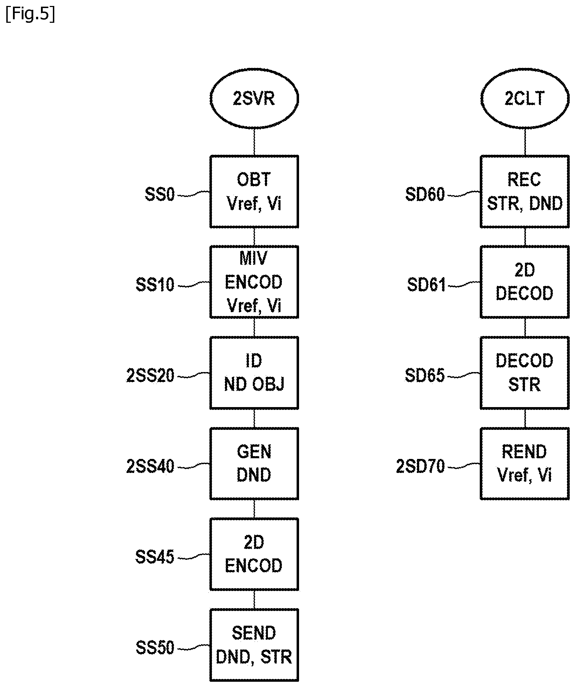

Figure 5 represents in flowchart the main steps of the methods respectively implemented by the server and the device in this second embodiment.

On the client 2CLT side, the second embodiment of the method for rendering multiple views is composed by the following step:
- a step SD60, performed by the module MD60, for receiving the stream STR and the non-diffuse data 2DND transmitted by the server 2SVR;
- a step SD61, performed by the module MD61 of decoding the transmitted stream STR and non-diffuse data 2DND;
- a step SD65, performed by the module MD65 of decoding the stream STR;
- a step 2SD70, performed by the module 2MD70 of rendering the views Vref and Vi.

On the server 2SVR side, the second embodiment of the method for transmitting data used by the device 1CTL for rendering the views is composed by the following step:
- a step SS0, performed by the module MS0, for obtaining the basic view Vref and the alternate views Vi;
- a step SS10, performed by the module MS10 for encoding the stream STR;
- a step 2SS20, performed by the module 1MS20 for identifying non-diffuse objects;
- a step 2SS40, performed by the module 1MS40 for generating the non-diffuse data 2DND;
- a step SS45, performed by the module MS45 for encoding the stream STR and the non-diffuse data 2DND;
- a step SS50, performed by the module MS50 for sending the encoded stream STR and non-diffuse data 2DND.

### Third embodiment

In this third embodiment, the stream STR of encoded views is shown in figure 2B, identical or similar to those of the first and second embodiments.

The third embodiment is in the context where views Vi* are generated by the server SVR. These generated views Vi* comprise the texture images Ti* of non-diffuse objects represented with new points of view. They are used by the client device CLT to render the non-diffuse objects according to these new points of view.

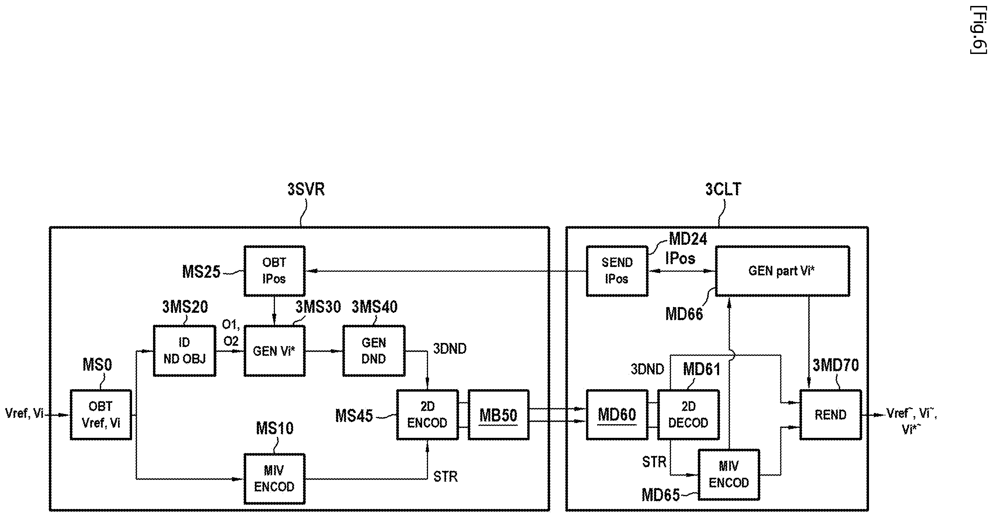

Figure 6 shows a 3SRV server and a device 3CLT according to the third embodiment.

Compared to the second embodiment, this third embodiment comprises a module 3MS30 of generating the generated views Vi*.

Also in this embodiment, a module MD24 of the device 3CLT send information IPos representative of the new point of views. For example, this information IPos may comprise, for each view to be generated, a position of the observer of the scene corresponding to this view. In another example, this information IPos comprises the relative positions of the observer with respect to each non-diffuse object.

The information IPos are received by the module MS25 of the server 3SVR, and then used by the module 3MS30 for generating the views Vi*.

In this embodiment, the views Vi* are generated based on the basic and alternate views Vref and Vi. In particular, the depth map of each of these views Vref and Vi are used to map each pixel into a three-dimensional point cloud representing the scene S. Then, each point of this three-dimensional representation of the scene S are projected on a texture image representing a view of the scene S according to the information IPos on the observer's position.

In another embodiment, a texture image Ti* of a view Vi* is computed as a weighted average of the texture image Ti of an alternate view Vi and the texture image Vref of the basic view. For instance, if the view Vi* corresponds to the point of view placed in between the point of view according to the view Vi and the point of view according to the view Vref, the texture image Ti* is computed as the average of the texture images Ti and Tref.

The average of two texture images is a texture image constituted by the averages of pairs of respective pixels of both images.

In the third embodiment, for each non-diffuse object O1 and O2, each generated view Vi*, and each alternate view Vi, the module 3MS40 computes:
- the differences ΔT_1(Vref, Vi*) and ΔT_2(Vref, Vi*) between the texture of the object in the generated view Vi* and the texture of this object in the basic view Vref; and
- the differences ΔT_1(Vi, Vi*) and ΔT_2(Vi, Vi*) between the texture of the object in the generated view Vi* and the texture of this object in the alternate view Vi.

These differences of textures are comprised in the non-diffuse data DND used by the client device CLT to render the non-diffuse object in the alternate views Vi as well as in generated views Vi*.

In this embodiment, a module MD66 of the device 3CLT generates views from the basic view Vref and the pruned alternate view Vi (i.e. the additional views) decoded by the module MD65. The module MD66 also uses the information IPos to generate the views according to the observer's position given in the information IPos.

The module MD66 may use the same method as the module 3MD30 for generating the views.

It is important to notice that the views generated by the module MD66 do not comprise information about the appropriate reflectance of the non-diffuse objects.

The module 3MD70 then combines the non-diffuse data 3DND with these views generated by the module MD66 to render the generated views Vi*, as well as the alternate views Vi, with the adequate textures of non-diffuse objects.

In another embodiment, the complete views Vi* generated on the server side are transmitted to the client 3CLT. In this case, a larger amount of data 3DND has to be transmitted but the client does not have to compute generated views. This can be advantageous in case of lower pixel rate PR.

In the third embodiment, the non-diffuse data 3DND also comprise labels Tags(Vi) and Tags(Vi*) of each non-diffuse object appearing in the alternate and generated views Vi and Vi*, as represented in figure 8D

The non-diffuse data 3DND can also comprise positions Pos(Vi) and Pos(Vi*) of each non-diffuse object appearing in the views Vi and Vi*, as represented in figure 8D.

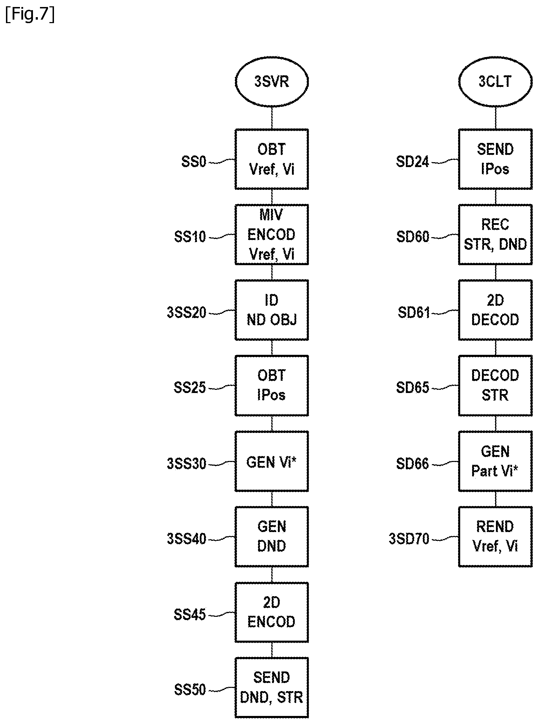

Figure 7 represents in flowchart the main steps of the methods respectively implemented by the server and the device in this third embodiment.

On the client 3CLT side, the first embodiment of the method for rendering multiple views is composed by the following step:
- a step SD24, performed by the module MD24, of sending the information IPos to the server 3SVR;
- a step SD60, performed by the module MD60, for receiving the stream STR and the non-diffuse data 3DND transmitted by the server 3SVR;
- a step SD61, performed by the module MD61 of decoding the transmitted stream STR and non-diffuse data 3DND;
- a step SD65, performed by the module MD65 of decoding the stream STR;
- a step SD66, performed by the module MD66 of generating views ;
- a step 3SD70, performed by the module 3MD70 of rendering the views Vref and Vi.

On the server 1SVR side, the first embodiment of the method for transmitting data used by the device 1CTL for rendering the views is composed by the following step:
- a step SS0, performed by the module MS0, for obtaining the basic view Vref and the alternate views Vi;
- a step SS10, performed by the module MS10 for encoding the stream STR;
- a step 3SS20, performed by the module 3MS20 for detecting non-diffuse pixels;
- a step SS25, performed by the module MS25 for receiving the information IPos;
- a step 3SS30, performed by the module 3MS30 for generating the generated views Vi*;
- a step 3SS40, performed by the module 3MS40 for generating the non-diffuse data 3DND;
- a step SS45, performed by the module MS45 for encoding the stream STR and the non-diffuse data 3DND;
- a step SS50, performed by the module MS50 for sending the encoded stream STR and non-diffuse data 3DND.

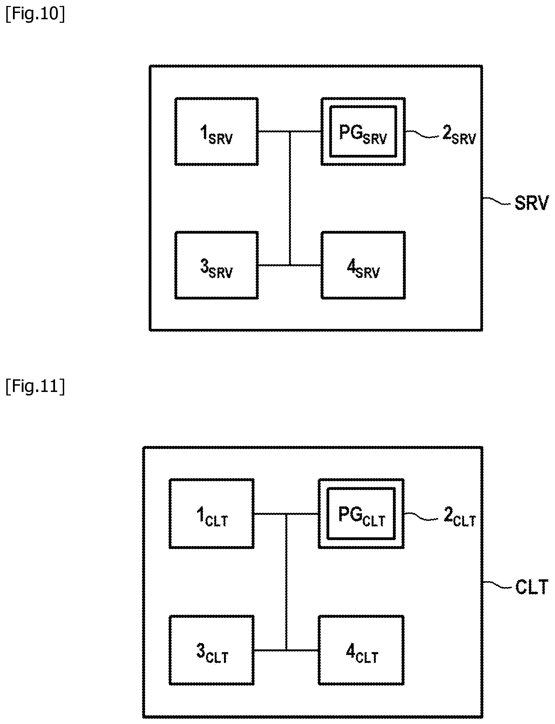

As illustrated in figure 10, the server 3SRV comprises in particular a processor 1_{SRV}, a random access memory 3_{SRV}, a read-only memory 2_{SRV}, a non-volatile flash memory 4_{SRV}.

The read-only memory 2_{SRV} constitutes a recording medium according to the invention, readable by the processor 1_{SRV} and on which a computer program PG_{SRV} according to the invention is recorded.

The computer program PG_{SRV} defines the functional (and here software) modules of the server.

As illustrated in figure 11, the device CLT comprises in particular a processor 1_{CLT}, a random access memory 3_{CLT}, a read-only memory 2_{CLT}, a non-volatile flash memory 4_{CLT}.

The read-only memory 2_{CLT} constitutes a recording medium according to the invention, readable by the processor 1_{CLT} and on which a computer program PG_{CLT} according to the invention is recorded.

The computer program PG_{CLT} defines the functional (and here software) modules of the device CLT.

## Claims

1. A method implemented by a server (1SVR) for transmitting data used by a device (1CTL) for rendering multiple views (Vref, Vi) of a single scene, said multiple views comprising at least one basic view (Vref) and at least one alternate view (Vi), said method comprising steps of:
- generating (SS10) a stream (STR) by encoding said views (Vref, Vi);
- detecting (1SS20) non-diffuse pixels (NDP) representing pixels of a non-diffuse surface in said at least one alternate view (Vi);
- selecting (1SS30) non-diffuse pixels (SNDP) among said detected non-diffuse pixels (NDP);
- generating (1SS40) non-diffuse data (1DND) which, for each selected non-diffuse pixel (SNDP) of each alternate view (Vi), comprise (i) information identifying the selected pixel in the alternate view (Vi) and (ii) a texture difference ΔT(Vref,Vi) equal to the difference between the texture of said pixel in the alternate view (Vi) and the texture of a matching pixel in the basic view (Vref); and
- transmitting (SS50) said stream (STR) and said non-diffuse data (1DND) to said device (1CTL), wherein a size of said non-diffuse data is a function of a pixel rate (PR) of said device (1CTL) and/or of a transmission rate (TR) between said server (1SVR) and said device (1CTL), wherein the pixel rate (PR) corresponds to a quantity of received data which can be decoded and rendered on a client side per unit of time.

2. The method according to claim 1, wherein said non-diffuse pixels (SNDP) are selected (1SS30) based on differences between:
- textures of pixels of said at least one alternate view (Vi); and
- textures of pixels of said at least one basic view (Vref) matching said pixels of said at least one alternate view (Vi).

3. The method according to claim 2, wherein said selected non-diffuse pixels (SNDP) are among those maximizing said differences.

4. The method according to claim 2 or 3, wherein said non-diffuse pixels (SNDP) are selected (1SS30) based on a comparison between said differences and at least one threshold depending on said pixel rate and/or on said transmission rate.

5. The method according to any of claims 1 to 4, wherein said selecting step (1SS30) comprises substeps of:
- associating (1SS301) the pixels of said views (Vref, Vi) with epipolar plane image lines;
- determining (1SS302), for each epipolar plane image line, at least one value representative of the form of this epipolar plane image line; and
said non-diffuse pixels (SNDP) are selected (S30) based on said values.

6. A method implemented by a device (1CLT) for rendering multiple views (Vref, Vi) of a single scene, said multiple views comprising at least one basic view (Vref) and at least one alternate view (Vi), said method comprising steps of:
- receiving (SD60), from a server (1SVR), a stream (STR) of encoded said views (Vref, Vi) and non-diffuse data (1DND) representative of selected non-diffuse pixels (SNDP) representing pixels of a non-diffuse surface of said at least one alternate view (Vi), wherein a size of the non-diffuse data (1DND) is a function of a pixel rate (PR) of the device (1CLT) and/or of a transmission rate (TR) between the server (1SVR) and the device (1CLT), the non-diffuse data (1DND) comprising, for each selected non-diffuse pixel (SNDP) of each alternate view (Vi), (i) information identifying the selected pixel in the alternate view (Vi) and (ii) a texture difference ΔT(Vref,Vi) equal to the difference between the texture of said pixel in the alternate view (Vi) and the texture of a matching pixel in the basic view (Vref);
- rendering (1SD70) said views (Vref, Vi) based on said stream (STR) and said non-diffuse data (1DND), wherein the rendering comprises, for each alternate view (Vi), adding the received texture differences ΔT(Vref,Vi) at the identified pixel locations to the texture decoded from the stream for the matching pixel of the basic view (Vref), thereby rendering the selected non-diffuse pixels (SNDP) of the alternate views (Vi) with reflectance corresponding to the respective alternate view (Vi), wherein the pixel rate (PR) corresponds to a quantity of received data which can be decoded and rendered on a client side per unit of time.

7. The method according of any of claim 1 to 6, wherein said data (1DND, 2DND, 3DND) are transmitted in a Supplemental Enhancement Information (SEI) message.

8. A server (1SVR) for transmitting data used by a device (1CTL) for rendering multiple views (Vref, Vi) of a single scene, said multiple views comprising at least one basic view (Vref) and at least one alternate view (Vi), said server (1SVR) comprising :
- a module (MS10) of generating a stream (STR) by encoding said views (Vref, Vi);
- a module (1MS20) of detecting non-diffuse pixels (NDP) representing pixels of a non-diffuse surface in said at least one alternate view (Vi);
- a module (1MS30) of selecting non-diffuse pixels (SNDP) among said detected non-diffuse pixels (NDP);
- a module (1MS40) of generating non-diffuse data (1DND) which, for each selected non-diffuse pixel (SNDP) of each alternate view (Vi), comprise (i) information identifying the selected pixel in the alternate view (Vi) and (ii) a texture difference ΔT(Vref,Vi) equal to the difference between the texture of said pixel in the alternate view (Vi) and the texture of a matching pixel in the basic view (Vref); and
- a module (MS50) of transmitting said stream (STR) and said non-diffuse data (1DND) to said device (1CTL), wherein a size of said non-diffuse data is a function of a pixel rate (PR) of said device (1CTL) and/or of a transmission rate (TR) between said server (1SVR) and said device (1CTL), wherein the pixel rate (PR) corresponds to a quantity of received data which can be decoded and rendered on a client side per unit of time.

## Patentansprüche

1. Ein von einem Server (1SVR) implementiertes Verfahren zum Senden von Daten, die von einer Vorrichtung (1CTL) zum Darstellen mehrerer Ansichten (Vref, Vi) einer einzelnen Szene verwendet werden, wobei die mehreren Ansichten mindestens eine Basisansicht (Vref) und mindestens eine alternative Ansicht (Vi) umfassen, wobei das Verfahren Schritte umfasst eines:
- Erzeugens (SS10) eines Stroms (STR) durch Codieren der Ansichten (Vref, Vi);
- Erfassens (1SS20) nicht-diffuser Pixel (NDP), die Pixel einer nicht-diffusen Oberfläche in der mindestens einen alternativen Ansicht (Vi) darstellen;
- Auswählens (1SS30) nicht-diffuser Pixel (SNDP) unter den erfassten nicht-diffusen Pixeln (NDP);
- Erzeugens (1SS40) nicht-diffuser Daten (1DND), die für jedes ausgewählte nicht-diffuse Pixel (SNDP) jeder alternativen Ansicht (Vi) (i) Informationen zum Identifizieren des ausgewählten Pixels in der alternativen Ansicht (Vi) und (ii) eine Texturdifferenz ΔT(Vref,Vi) umfassen, die der Differenz zwischen der Textur des Pixels in der alternativen Ansicht (Vi) und der Textur eines zugeordneten Pixels in der Basisansicht (Vref) entspricht; und
- Sendens (SS50) des Stroms (STR) und der nicht-diffusen Daten (1DND) an die Vorrichtung (1CTL), wobei eine Größe der nicht-diffusen Daten eine Funktion einer Pixelrate (PR) der Vorrichtung (1CTL) und/oder einer Übertragungsrate (TR) zwischen dem Server (1SVR) und der Vorrichtung (1CTL) ist, wobei die Pixelrate (PR) einer Menge empfangener Daten entspricht, die pro Zeiteinheit auf einer Client-Seite decodiert und dargestellt werden kann.

2. Das Verfahren nach Anspruch 1, wobei die nicht-diffusen Pixel (SNDP) auf der Grundlage von Unterschieden ausgewählt (1SS30) werden zwischen:
- Texturen von Pixeln der mindestens einen alternativen Ansicht (Vi); und
- Texturen von Pixeln der mindestens einen Basisansicht (Vref), die den Pixeln der mindestens einen alternativen Ansicht (Vi) zugeordnet sind.

3. Das Verfahren nach Anspruch 2, wobei die ausgewählten nicht-diffusen Pixel (SNDP) unter denjenigen sind, die die Unterschiede maximieren.

4. Das Verfahren nach Anspruch 2 oder 3, wobei die nicht-diffusen Pixel (SNDP) auf der Grundlage eines Vergleichs zwischen den Unterschieden und mindestens einem Schwellwert ausgewählt (1SS30) werden, der von der Pixelrate und/oder von der Übertragungsrate abhängt.

5. Das Verfahren nach einem der Ansprüche 1 bis 4, wobei der Auswahlschritt (1SS30) Teilschritte umfasst eines:
- Zuordnens (1SS301) der Pixel der Ansichten (Vref, Vi) zu Epipolarebenenbildlinien;
- Bestimmens (1SS302), für jede Epipolarebenenbildlinie, mindestens eines Werts, der für die Form dieser Epipolarebenenbildlinie repräsentativ ist; und
wobei die nicht-diffusen Pixel (SNDP) auf der Grundlage der Werte ausgewählt (S30) werden.

6. Ein von einer Vorrichtung (1CLT) implementiertes Verfahren zum Darstellen mehrerer Ansichten (Vref, Vi) einer einzelnen Szene, wobei die mehreren Ansichten mindestens eine Basisansicht (Vref) und mindestens eine alternative Ansicht (Vi) umfassen, wobei das Verfahren Schritte umfasst eines:
- Empfangens (SD60), von einem Server (1SVR), eines Stroms (STR) der codierten Ansichten (Vref, Vi) und nicht-diffuser Daten (1DND), die für ausgewählte nicht-diffuse Pixel (SNDP) repräsentativ sind, welche Pixel einer nicht-diffusen Oberfläche der mindestens einen alternativen Ansicht (Vi) darstellen, wobei eine Größe der nicht-diffusen Daten (1DND) eine Funktion einer Pixelrate (PR) der Vorrichtung (1CLT) und/oder einer Übertragungsrate (TR) zwischen dem Server (1SVR) und der Vorrichtung (1CLT) ist, wobei die nicht-diffusen Daten (1DND) für jedes ausgewählte nicht-diffuse Pixel (SNDP) jeder alternativen Ansicht (Vi) (i) Informationen zum Identifizieren des ausgewählten Pixels in der alternativen Ansicht (Vi) und (ii) eine Texturdifferenz ΔT(Vref,Vi) umfassen, die der Differenz zwischen der Textur des Pixels in der alternativen Ansicht (Vi) und der Textur eines zugeordneten Pixels in der Basisansicht (Vref) entspricht;
- Darstellens (1SD70) der Ansichten (Vref, Vi) auf der Grundlage des Stroms (STR) und der nicht-diffusen Daten (1DND), wobei das Darstellen für jede alternative Ansicht (Vi) das Addieren der empfangenen Texturdifferenzen ΔT(Vref,Vi) an den identifizierten Pixelpositionen zu der aus dem Strom für das zugeordnete Pixel der Basisansicht (Vref) decodierten Textur umfasst, wodurch die ausgewählten nicht-diffusen Pixel (SNDP) der alternativen Ansichten (Vi) mit einer Reflektivität dargestellt werden, die der jeweiligen alternativen Ansicht (Vi) entspricht, wobei die Pixelrate (PR) einer Menge empfangener Daten entspricht, die pro Zeiteinheit auf einer Client-Seite decodiert und dargestellt werden kann.

7. Das Verfahren nach einem der Ansprüche 1 bis 6, wobei die Daten (1DND, 2DND, 3DND) in einer Supplemental Enhancement Information (SEI)-Nachricht gesendet werden.

8. Ein Server (1SVR) zum Senden von Daten, die von einer Vorrichtung (1CTL) zum Darstellen mehrerer Ansichten (Vref, Vi) einer einzelnen Szene verwendet werden, wobei die mehreren Ansichten mindestens eine Basisansicht (Vref) und mindestens eine alternative Ansicht (Vi) umfassen, wobei der Server (1SVR) umfasst :
- ein Modul (MS10) zum Erzeugen eines Stroms (STR) durch Codieren der Ansichten (Vref, Vi);
- ein Modul (1MS20) zum Erfassen nicht-diffuser Pixel (NDP), die Pixel einer nicht-diffusen Oberfläche in der mindestens einen alternativen Ansicht (Vi) darstellen;
- ein Modul (1MS30) zum Auswählen nicht-diffuser Pixel (SNDP) unter den erfassten nicht-diffusen Pixeln (NDP);
- ein Modul (1MS40) zum Erzeugen nicht-diffuser Daten (1DND), die für jedes ausgewählte nicht-diffuse Pixel (SNDP) jeder alternativen Ansicht (Vi) (i) Informationen zum Identifizieren des ausgewählten Pixels in der alternativen Ansicht (Vi) und (ii) eine Texturdifferenz ΔT(Vref,Vi) umfassen, die der Differenz zwischen der Textur des Pixels in der alternativen Ansicht (Vi) und der Textur eines zugeordneten Pixels in der Basisansicht (Vref) entspricht; und
- ein Modul (MS50) zum Senden des Stroms (STR) und der nicht-diffusen Daten (1DND) an die Vorrichtung (1CTL), wobei eine Größe der nicht-diffusen Daten eine Funktion einer Pixelrate (PR) der Vorrichtung (1CTL) und/oder einer Übertragungsrate (TR) zwischen dem Server (1SVR) und der Vorrichtung (1CTL) ist, wobei die Pixelrate (PR) einer Menge empfangener Daten entspricht, die pro Zeiteinheit auf einer Client-Seite decodiert und dargestellt werden kann.

## Revendications

1. Procédé mis en œuvre par un serveur (1SVR) pour transmettre des données utilisées par un dispositif (1CTL) pour restituer de multiples vues (Vref, Vi) d'une scène unique, lesdites multiples vues comprenant au moins une vue de base (Vref) et au moins une vue alternative (Vi), ledit procédé comprenant les étapes consistant à :
- générer (SS10) un flux (STR) par codage desdites vues (Vref, Vi) ;
- détecter (1SS20) des pixels non diffus (NDP) représentant des pixels d'une surface non diffuse dans ladite au moins une vue alternative (Vi) ;
- sélectionner (1SS30) des pixels non diffus (SNDP) parmi lesdits pixels non diffus détectés (NDP) ;
- générer (1SS40) des données non diffuses (1DND) qui, pour chaque pixel non diffus sélectionné (SNDP) de chaque vue alternative (Vi), comprennent (i) des informations identifiant le pixel sélectionné dans la vue alternative (Vi) et (ii) une différence de texture ΔT(Vref,Vi) égale à la différence entre la texture dudit pixel dans la vue alternative (Vi) et la texture d'un pixel correspondant dans la vue de base (Vref) ; et
- transmettre (SS50) ledit flux (STR) et lesdites données non diffuses (1DND) audit dispositif (1CTL), dans lequel une taille desdites données non diffuses est fonction d'un débit de pixels (PR) dudit dispositif (1CTL) et/ou d'un débit de transmission (TR) entre ledit serveur (1SVR) et ledit dispositif (1CTL), le débit de pixels (PR) correspondant à une quantité de données reçues qui peut être décodée et restituée côté client par unité de temps.

2. Procédé selon la revendication 1, dans lequel lesdits pixels non diffus (SNDP) sont sélectionnés (1SS30) sur la base de différences entre :
- les textures de pixels de ladite au moins une vue alternative (Vi) ; et
- les textures de pixels de ladite au moins une vue de base (Vref) correspondant auxdits pixels de ladite au moins une vue alternative (Vi).

3. Procédé selon la revendication 2, dans lequel lesdits pixels non diffus sélectionnés (SNDP) sont parmi ceux maximisant lesdites différences.

4. Procédé selon la revendication 2 ou 3, dans lequel lesdits pixels non diffus (SNDP) sont sélectionnés (1SS30) sur la base d'une comparaison entre lesdites différences et au moins un seuil dépendant dudit débit de pixels et/ou dudit débit de transmission.

5. Procédé selon l'une quelconque des revendications 1 à 4, dans lequel ladite étape de sélection (1SS30) comprend les sous-étapes consistant à :
- associer (1SS301) les pixels desdites vues (Vref, Vi) à des lignes d'image de plan épipolaire ;
- déterminer (1SS302), pour chaque ligne d'image de plan épipolaire, au moins une valeur représentative de la forme de cette ligne d'image de plan épipolaire ; et
lesdits pixels non diffus (SNDP) sont sélectionnés (S30) sur la base desdites valeurs.

6. Procédé mis en œuvre par un dispositif (1CLT) pour restituer de multiples vues (Vref, Vi) d'une scène unique, lesdites multiples vues comprenant au moins une vue de base (Vref) et au moins une vue alternative (Vi), ledit procédé comprenant les étapes consistant à :
- recevoir (SD60), depuis un serveur (1SVR), un flux (STR) desdites vues codées (Vref, Vi) et des données non diffuses (1DND) représentatives de pixels non diffus sélectionnés (SNDP) représentant des pixels d'une surface non diffuse de ladite au moins une vue alternative (Vi), dans lequel une taille des données non diffuses (1DND) est fonction d'un débit de pixels (PR) du dispositif (1CLT) et/ou d'un débit de transmission (TR) entre le serveur (1SVR) et le dispositif (1CLT), les données non diffuses (1DND) comprenant, pour chaque pixel non diffus sélectionné (SNDP) de chaque vue alternative (Vi), (i) des informations identifiant le pixel sélectionné dans la vue alternative (Vi) et (ii) une différence de texture ΔT(Vref,Vi) égale à la différence entre la texture dudit pixel dans la vue alternative (Vi) et la texture d'un pixel correspondant dans la vue de base (Vref) ;
- restituer (1SD70) lesdites vues (Vref, Vi) sur la base dudit flux (STR) et desdites données non diffuses (1DND), la restitution comprenant, pour chaque vue alternative (Vi), l'ajout des différences de texture reçues ΔT(Vref,Vi) aux emplacements de pixels identifiés à la texture décodée à partir du flux pour le pixel correspondant de la vue de base (Vref), restituant ainsi les pixels non diffus sélectionnés (SNDP) des vues alternatives (Vi) avec une réflectance correspondant à la vue alternative respective (Vi), le débit de pixels (PR) correspondant à une quantité de données reçues qui peut être décodée et restituée côté client par unité de temps.

7. Procédé selon l'une quelconque des revendications 1 à 6, dans lequel lesdites données (1DND, 2DND, 3DND) sont transmises dans un message Supplemental Enhancement Information (SEI).

8. Serveur (1SVR) pour transmettre des données utilisées par un dispositif (1CTL) pour restituer de multiples vues (Vref, Vi) d'une scène unique, lesdites multiples vues comprenant au moins une vue de base (Vref) et au moins une vue alternative (Vi), ledit serveur (1SVR) comprenant :
- un module (MS10) de génération d'un flux (STR) par codage desdites vues (Vref, Vi) ;
- un module (1MS20) de détection de pixels non diffus (NDP) représentant des pixels d'une surface non diffuse dans ladite au moins une vue alternative (Vi) ;
- un module (1MS30) de sélection de pixels non diffus (SNDP) parmi lesdits pixels non diffus détectés (NDP) ;
- un module (1MS40) de génération de données non diffuses (1DND) qui, pour chaque pixel non diffus sélectionné (SNDP) de chaque vue alternative (Vi), comprennent (i) des informations identifiant le pixel sélectionné dans la vue alternative (Vi) et (ii) une différence de texture ΔT(Vref,Vi) égale à la différence entre la texture dudit pixel dans la vue alternative (Vi) et la texture d'un pixel correspondant dans la vue de base (Vref) ; et
- un module (MS50) de transmission dudit flux (STR) et desdites données non diffuses (1DND) audit dispositif (1CTL), dans lequel une taille desdites données non diffuses est fonction d'un débit de pixels (PR) dudit dispositif (1CTL) et/ou d'un débit de transmission (TR) entre ledit serveur (1SVR) et ledit dispositif (1CTL), le débit de pixels (PR) correspondant à une quantité de données reçues qui peut être décodée et restituée côté client par unité de temps.
